# EUROPÄISCHE PATENTSCHRIFT

(11) **EP 3 456 237 B1**
(45) Veröffentlichungstag und Bekanntmachung des Hinweises auf die Patenterteilung: **08.04.2020**
(21) Anmeldenummer: 18192947.2
(22) Anmeldetag: 06.09.2018
(51) Int. Cl.: A47L 15/42, D06F 39/00, D06F 39/04, A47L 15/48, D06F 58/20

(54) **GESCHIRRSPÜLMASCHINE MIT ZUMINDEST EINER WÄRMEPUMPE**
DISHWASHER WITH AT LEAST ONE HEAT PUMP
LAVE-VAISSELLE COMPRENANT AU MOINS UNE POMPE À CHALEUR

(30) Priorität: 14.09.2017 ES 201731115
(43) Veröffentlichungstag der Anmeldung: 20.03.2019
(73) Patentinhaber: BSH Hausgeräte GmbH, 81739 München (DE)
(72) Erfinder: Arandigoyen Martínez, Naiara, 31005 Pamplona (ES); Casado Carlino, Sergio, 31621 Sarriguren (ES); Castillo Bergad, Esther, 50018 Zaragoza (ES); Merino Alcaide, Eloy, 31621 Sarriguren (ES); Moliner Murillo, Gustavo, 31200 Estella (Navarra) (ES); Sagües García, Xabier, 31001 Pamplona (ES); Urdiain Yoldi, Koldo, 31240 Ayegui (ES)

(56) Entgegenhaltungen:
- WO-A1-2015/090409
- CH-A2- 699 692
- CN-A- 106 606 342
- DE-A1- 3 048 268
- DE-A1- 19 707 287

## Beschreibung

Die vorliegende Erfindung betrifft eine Haushaltsgeschirrspülmaschine mit einem Spülbehälter zur Aufnahme von Geschirr, Gläsern, Bestecken oder ähnlichem Spülgut, und mit zumindest einer Wärmepumpe.

Die Geschirrspülmaschine der WO 2015/090409 A1 weist ein Wärmepumpensystem mit einem ersten Kondensor bzw. Verflüssiger und einem zweiten Kondensor auf. Das Wärmepumpensystem ist mittels zweier Ventile zwischen einer ersten Konfiguration, bei der sein Kompressor mit dem ersten Kondensor zum Erwärmen von Spülwasser in einer Spülphase eines durchzuführenden Geschirrspülprogramms verbunden ist, und einer zweiten Konfiguration umschaltbar, bei der während der Trocknungsphase des Geschirrspülprogramms sein Verdampfer feuchte Luft aus dem Spülbehälter der Geschirrspülmaschine zum Auskondensieren von Feuchtigkeit abkühlt und sein Kompressor mit dem zweiten Kondensor zum Erwärmen der entfeuchteten Luft verbunden ist. Die derart entfeuchtete und erwärmte Luft wird in den Spülbehälter zurückgeführt.

Auch das Wärmepumpensystem der Geschirrspülmaschine der CN 106 606 342 A umfasst einen ersten Kondensor und einen zweiten Kondensor. Ein Umschaltventil im der Wärmepumpensystem sorgt dafür, dass zum ersten Kondensor Kühlmittel aus dem Kompressor des Wärmepumpensystems fließt, wenn Waschwasser für eine Waschphase eines Geschirrspülprogramms erwärmt und auf zu reinigendes Spülgut im Spülbehälter der Geschirrspülmaschine versprüht werden soll. Es schaltet den Kühlmittelfluss selektiv um auf den zweiten Kondensor im Trocknungsgang. Dieser zweite Kondensor ist in einem Umluftkanal in Luftströmungsrichtung betrachtet nach dem Verdampfer der Wärmepumpenanordnung angeordnet. Auf diese Weise wird feuchte Luft, die aus dem Spülbehälter in den Umluftkanal strömt, zunächst mit Hilfe des Verdampfers abgekühlt, wodurch aus ihr Feuchtigkeit auskondensiert, und anschließend die derart getrocknete Luft mit Hilfe des zweiten Kondensors wieder erwärmt und dann zurück in den Spülbehälter geführt, um dort erneut Feuchtigkeit aufzunehmen.

Die Geschirrspülmaschine der CH 699 692 A2 weist einen ersten Wassertank zur temporären Aufnahme von aus ihrem Spülbottich kommenden Prozesswasser und einen zweiten Wassertank zur temporären Aufnahme von aus ihrem Spülbottich kommenden Prozesswasser oder Frischwasser auf. Dazu sind Tankventile vorgesehen, um das Prozesswasser mittels einer Ablaufpumpe wahlweise dem ersten oder dem zweiten Wassertank aus dem Sumpf des Spülbottichs zuzuführen. Ein erster Kondensator einer Wärmepumpe dient dazu, Wärme dem Prozesswasser im Spülbottich und/oder in einem am Bottich angeschlossenen Zirkulationskreislauf zuzuführen. Ein zweiter Kondensator der Wärmepumpe dient dazu, dem Prozesswasser im zweiten Wassertank Wärme zuzuführen. Mittels eines Umschaltventils in der Wärmepumpe lässt sich dabei deren Wärmepumpenmedium wahlweise dem ersten oder dem zweiten Kondensator zuführen. Ein zweiter Verdampfer der Wärmepumpenanordnung steht mit dem Prozesswasser im zweiten Wassertank zum Wärmeentzug in thermischen Kontakt. Der erste und der zweite Verdampfer lassen sich wahlweise betreiben, wozu nach dem Expansionsventil der Wärmepumpe ein Umschaltventil vorgesehen ist, mit welchem das Wärmepumpenmedium vom Expansionsventil entweder dem ersten oder dem zweiten Verdampfer zuführbar ist. Das Prozesswasser der Zwischenspülphase eines Geschirrspülprogramms wird dem zweiten Wassertank zugeführt, während jenes der Hauptspülphase des Geschirrspülprogramms dem ersten Wassertank zugeführt wird. Dies führt dazu, dass beide Wassertanks warmes Wasser enthalten, aber unterschiedlicher Temperatur. In der Regel wird die Temperatur im ersten Wassertank höher sein als die Temperatur im zweiten Wassertank. Da die Leistungszahl einer Wärmepumpe besser wird, je kleiner die Temperaturdifferenz ist, kann die Effizienz der Geschirrspülmaschine verbessert werden, wenn das kalte Prozesswasser des Spülbottichs in der Klarspülphase des Geschirrspülprogramms zunächst dadurch erwärmt wird, dass die Wärmepumpe dem kälteren Wassertank Wärme entzieht und diese dem Prozesswasser zuführt, und erst dann, wenn das Prozesswasser schon wärmer ist, das Umschaltventil umgeschaltet wird, um dem Wassertank mit der höheren Temperatur Wärme zu entziehen.

Die Wärmepumpe der Geschirrspülvorrichtung der DE 197 07 287 A1 umfasst zur Abwärmenutzung der Abluft der Geschirrspülvorrichtung zwei getrennte Kältekreisläufe mit jeweils einem ersten Wärmetauscher in Wärmeaustausch mit der Abluft der Geschirrspülvorrichtung, wobei der erste Kältekreislauf mindestens einen zweiten Wärmetauscher in Wärmeaustausch mit einem Klarspülwasser der Geschirrspülvorrichtung enthält, und der zweite Kältekreislauf mindestens einen dritten Wärmetauscher besitzt, der mit einer Tankheizung in einem Reinigungsflüssigkeitsauffangbehälter der Geschirrspülvorrichtung betriebsmäßig verbunden ist. Der dritte Wärmetauscher ist ein Kondensator. Er wird mittels Trennkupplung an den Kompressor des zweiten Kältekreislaufs angeschlossen, so dass das Hauptaggregat und der Wärmetauscher getrennt evakuiert und mit Kältemittel gefüllt werden können.

Für den Betrieb eines Haushaltsgeräts, etwa einer Geschirrspülmaschine, ist es wichtig, einen möglichst geringen Energiebedarf vorzusehen und somit auch künftige gesetzliche Anforderungen erfüllen zu können und auch bei der Auszeichnung mit einem Energieverbrauchslabel eine möglichst günstige Einstufung zu erhalten. Es hat sich gezeigt, dass hierfür die Ausstattung eines Haushaltsgeräts mit einer Wärmepumpe einen möglichen Weg bietet. Eine solche Anordnung ist beispielsweise aus der EP 2 215 954 B1 bekannt. Dabei dürfen jedoch Energiesparmaßnahmen im Betrieb nicht zu einem so hohen konstruktiven und montagetechnischen Aufwand führen, dass darüber ein großer Teil der erreichten Vorteile wieder aufgezehrt würde.

Der Erfindung liegt daher das Problem zugrunde, eine Wärmepumpe einer Haushaltsgeschirrspülmaschine möglichst energieeffizient nutzen zu können.

Die Erfindung löst das Problem durch einen Gegenstand mit den Merkmalen des Anspruchs 1. Hinsichtlich vorteilhafter Ausgestaltungen und Weiterbildungen der Erfindung wird auf die Ansprüche 2 bis 8 verwiesen.

Dadurch, dass erfindungsgemäß einem während des Betriebs der Wärmepumpe wärmeabgebenden Teil der Wärmepumpe ein erstes Ventil vorgeordnet und ein zweites Ventil nachgeordnet ist, können dort im Betrieb herrschende Temperatur- und/oder Druckverhältnisse auch in einer ausgeschalteten Phase bzw. inaktiven Phase der Wärmepumpe zumindest eine Zeit lang erhalten bleiben, so dass bei einem späteren, erneuten Einschalten der Wärmepumpe die energetischen Verhältnisse deutlich verbessert sind.

Erfindungsgemäß ist das wärmeabgebende Teil der Wärmepumpe ein Verflüssiger bzw. Kondensor. Auf diese Weise sind die Ventile einem Verflüssiger, auch als Kondensator bezeichnet, vorgeordnet und nachgeordnet, so dass bei Wiedereinschalten dort direkt auch der Aggregatzustand des Wärmepumpenmediums bzw. Wärmetauschermediums passend vorliegt und eine lange und energetisch ineffektive Anlaufzeit der Wärmepumpe vermieden werden kann.

Erfindungsgemäß ist die Wärmepumpe jeweils in zumindest zwei Phasen eines durchzuführenden Spülgangs jeweils zur Unterstützung einer jeweiligen Erwärmung aktiv, so dass dann die in der ersten Phase erreichten Verhältnisse durch das Schließen der Ventile nach Ende der ersten aktiven Phase für die zweite Phase "konserviert" werden können.

Das erste Ventil ist vorzugsweise im Bereich des Einlasses des Verflüssigers in die vom Kompressor zum Verflüssiger führende Transportleitung, in der bei Betrieb des Kompressors ein Wärmepumpenmedium bzw. Wärmetauschermedium vom Kompressor zum Verflüssiger gefördert wird, eingefügt, oder im Einlass des Verflüssigers vorgesehen. Das zweite Ventil ist vorzugsweise im Bereich des Auslasses des Verflüssigers in die vom Verflüssiger zur Expansionseinrichtung, insbesondere Kapillarröhrchen oder Drossel, der Wärmepumpe führende Transportleitung, in der bei Betrieb des Kompressors das Wärmepumpenmedium bzw. Wärmetauschermedium vom Verflüssiger zur Expansionseinrichtung gefördert wird, eingefügt, oder im Auslass des Verflüssigers vorgesehen. Mit Hilfe des ersten Ventils und des zweiten Ventils kann erfindungsgemäß der Verflüssiger einlassseitig und auslassseitig während einer inaktiven Phase der Wärmepumpe, d.h. während der Zeitdauer, die zwischen zwei Phasen eines durchzuführenden Spülgangs mit jeweils aktiv betriebener Wärmepumpe liegt, abgesperrt werden, so dass das in ihm vorhandene Wärmepumpenmedium nicht aus dem Verflüssiger zum Verdampfer und zum Kompressor der Wärmepumpe entweichen kann, und seinen Aggregatszustand, energetischen Zustand, und Druckzustand aus der ersten aktiven Betriebsphase der Wärmepumpe während der Pause, d.h. inaktiven Phase der Wärmepumpe bis zur zeitlich später folgenden, zweiten aktiven Betriebsphase der Wärmepumpe weitgehend beibehält. Dadurch ist beim Start des Kompressors für die zweite aktive Betriebsphase der Wärmepumpe bzw. deren Kompressors ein instationärer Einschwingvorgang bzw. eine Transiente beim durch den Verflüssiger bewirkten zweiten Erwärmungsvorgang der Wärmepumpe weitgehend vermieden oder zumindest verringert gegenüber einem zweiten Einschalten einer Wärmepumpe, bei der kein erstes Ventil vor dem Verflüssiger und kein zweites Ventil nach dem Verflüssiger vorgesehen ist.

Falls die Wärmepumpe ein steuerbares Expansionsventil als Entspannungsvorrichtung zwischen dem Verflüssiger und dem Verdampfer aufweist, kann ggf. dieses das zweite, dem Verflüssiger nachgeordnete Ventil bilden, das in eine Schließstellung oder solche Drosselstellung gebracht werden kann, dass bei inaktiven Kompressor der Wärmepumpe das Strömen des Wärmepumpenmediums bzw. Arbeitsmediums der Wärmepumpe von deren Hochdruckseite zur Niederdruckseite unterbunden oder stark verringert werden kann, so dass bei einem erneuten Start des Kompressors für eine spätere, zweite Erwärmungsphase mit weitgehend demselben Druckunterschied zwischen der Hockdruckseite und der Niederdruckseite der Wärmepumpe wie am Ende der ersten Erwärmungsphase der Wärmepumpe weitergemacht werden kann.

Erfindungsgemäß ist die erste Phase zur Unterstützung einer Erwärmung ein Teil eines flüssigkeitsführenden Teilspülgangs eines Spülgangs, insbesondere des sogenannten Reinigungsgangs des Spülgangs einer Haushaltsgeschirrspülmaschine, bei welchem insbesondere mit Reinigungsmittel versetztes Wasser aufgewärmt wird.

Die zweite Phase zur Unterstützung einer Erwärmung kann erfindungsgemäß ein Teil eines weiteren flüssigkeitsführenden Teilspülgangs, insbesondere des sogenannten Klarspülgangs, des Spülgangs einer Haushaltsgeschirrspülmaschine, oder des Trocknungsgangs des Spülgangs sein, bei der nach einer zwischenzeitlichen Abkühlung vorzugsweise eine noch höhere Temperatur als im zeitlich früheren flüssigkeitsführenden Teilspülgang mit der ersten Erwärmungsphase erreicht werden soll. Hier kommt es daher auf eine hohe Energieeffizienz besonders an.

Um insbesondere einen natürlicherweise angestrebten Druckausgleich nach der ersten Phase zu vermeiden und den erreichten Ungleichgewichtszustand zu konservieren, können die Ventile nach Abschluss der ersten Phase zur Unterstützung einer Erwärmung schließen, insbesondere unmittelbar nach Abschluss der ersten Phase.

Um ein möglichst schnelles und effektives Einsteigen in die Aktivität der Wärmepumpe in der zweiten Phase zu ermöglichen, können die Ventile vor Beginn der zweiten Phase zur Unterstützung einer Erwärmung wieder öffnen, insbesondere auch hier zur Optimierung der Effizienz unmittelbar vor Beginn der zweiten Phase zur Unterstützung einer Erwärmung.

Gemäß einer vorteilhaften Weiterbildung der Erfindung ist bei einer Haushaltsgeschirrspülmaschine die erste aktive Phase der Wärmepumpe ein Teil eines ersten flüssigkeitsführenden Teilspülgangs, insbesondere des Reinigungsgangs, eines durchzuführenden Spülgangs, und die zweite aktive Phase ist ein Teil eines zweiten flüssigkeitsführenden Teilspülgangs, insbesondere Klarspülgangs, des Spülgangs, wobei das erste Ventil und dass zweite Ventil während der ersten aktiven Phase und der zweiten aktiven Phase der Wärmepumpe geöffnet sind, wohingegen das erste Ventil und das zweite Ventil im Zeitraum zwischen der ersten aktiven Phase und der zweiten aktiven Phase der Wärmepumpe, während dem die Wärmepumpe inaktiv ist, jeweils geschlossen sind.

In der nicht aktiven Phase der Wärmepumpe können die während der ersten Phase erreichten Druckverhältnisse und/oder die erreichte Temperatur bei geschlossenen Ventilen zumindest nahezu gehalten werden, so dass dann unmittelbar und ohne lange Anlaufzeit in die zweite Phase gestartet werden kann.

Sehr vorteilhaft können beide Ventile gleichartig ausgebildet sein, so dass die Montage fehlerunanfällig ist und die Teilezahl gering bleibt.

Das Öffnungs- und Schließverhalten der beiden Ventile kann in einem Steuerprogramm softwareseitig und in Anpassung an die sonstigen Programmverhältnisse hinterlegt sein

Die vorstehend erläuterten und/oder die sonstigen, in den Unteransprüchen wiedergegebenen vorteilhaften Aus- und/oder Weiterbildungen der Erfindung können dabei - außer z.B. in den Fällen eindeutiger Abhängigkeiten oder unvereinbarer Alternativen - einzeln oder aber auch in beliebiger Kombination miteinander zur Anwendung kommen.

Weitere Vorteile und Merkmale der Erfindung und/oder deren vorteilhafte Aus- und Weiterbildungen ergeben sich aus in der Zeichnung dargestellten und nachfolgend beschriebenen Ausführungsbeispielen des Gegenstandes der Erfindung.

In der Zeichnung zeigt:
- Fig. 1: eine schematische perspektivische Ansicht von schräg vorne einer Ausführungsform einer erfindungsgemäß mit einer Wärmpumpe ausgestatteten Haushaltsgeschirrspülmaschine, mit einer hier vorderseitigen Tür und einem Spülbehälter im Innern,
- Fig. 2: eine schematische Ansicht der von der Geschirrspülmaschine von Figur 1 umfassten Wärmepumpe, die nach dem erfindungsgemäßen Prinzip ausgebildet ist und/oder betrieben wird,
- Fig. 3: eine diagrammatische Darstellung eines Programmablaufs eines Spülgangs der Haushaltsgeschirrspülmaschine der Figuren 1 und 2, deren Wärmepumpe nach einem ersten vorteilhaften Ausführungsbeispiel betrieben wird, wobei als x-Achse die Zeit und als y-Achse die Temperatur im Spülbehälter aufgetragen ist, und
- Fig. 4: eine diagrammatische Darstellung eines Programmablaufs eines Spülgangs der Haushaltsgeschirrspülmaschine der Figuren 1 und 2, deren Wärmepumpe nach einem zweiten vorteilhaften Ausführungsbeispiel betrieben wird, wobei als x-Achse die Zeit und als y-Achse die Temperatur im Spülbehälter aufgetragen ist.

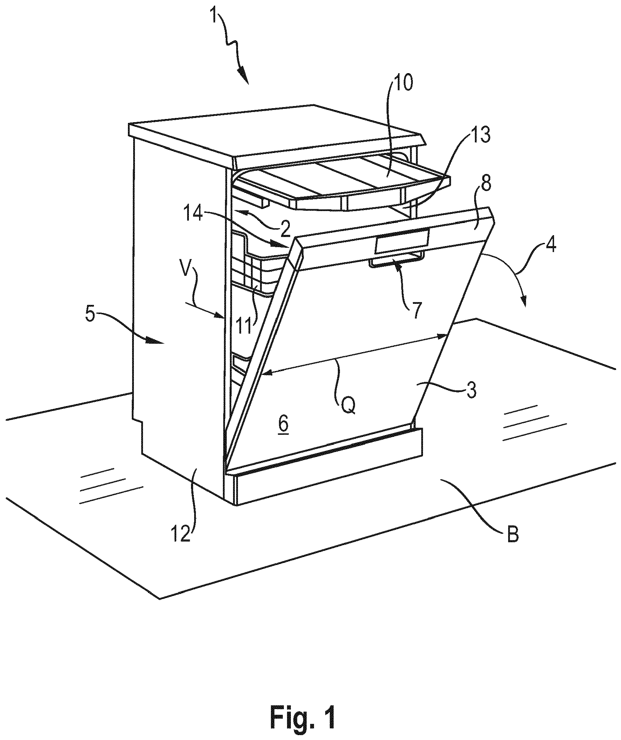

Das in Figur 1 schematisch dargestellte Haushaltsgerät ist hier eine Geschirrspülmaschine, und zwar eine Haushaltsgeschirrspülmaschine 1.

Die im folgenden beschriebene Haushaltsgeschirrspülmaschine 1 nach Figur 1 weist als Bestandteil eines teilweise nach außen offenen oder geschlossenen Gerätekörpers 5 einen Spülbehälter 2 zur Aufnahme von zu bearbeitendem Spülgut wie Geschirr, Töpfen, Bestecken, Gläsern, Kochutensilien u. ä. auf. Das Spülgut kann dabei zum Beispiel in Geschirrkörben 11 und/oder einer Besteckschublade 10 halterbar und dabei von sog. Spülflotte beaufschlagbar sein. Als Spülflotte bzw. Spülflüssigkeit wird dabei frisches oder insbesondere im Betrieb umlaufendes Wasser mit oder ohne Reinigungsmittel und/oder Klarspülmittel und/oder Trocknungsmittel verstanden. Die Spülflotte kann zusätzlich auch mit Verschmutzungen aus dem laufenden Betrieb versetzt sein. Der Spülbehälter 2 kann einen zumindest im wesentlichen rechteckigen Grundriss mit einer in Betriebsstellung einem Benutzer zugewandten Vorderseite V aufweisen. Diese Vorderseite V kann dabei einen Teil einer Küchenfront aus nebeneinander stehenden Küchenmöbeln bilden oder bei einem allein stehenden Gerät auch ohne Bezug zu weiteren Möbeln sein.

Der Spülbehälter 2 ist insbesondere an dieser Vorderseite V von einer Tür oder Klappe 3 verschließbar. Diese Tür 3 ist in Figur 1 in teilweise geöffneter und dann schräg zur Vertikalen stehenden Stellung gezeigt. In ihrer Schließstellung steht sie hingegen aufrecht und ist gemäß der Zeichnung zu ihrer Öffnung um eine untere Horizontalachse nach vorne und unten in Richtung des Pfeils 4 aufschwenkbar, so dass sie in vollständig geöffneter Stellung zumindest nahezu horizontal liegt.

An ihrer in Schließstellung vertikalen, dem Benutzer zugewandten Außen- und Vorderseite V kann die Tür 3 mit einer Dekorplatte 6 versehen sein, um damit eine optische und/oder haptische Aufwertung und/oder eine Anpassung an umliegende Küchenmöbel zu erfahren.

Die Geschirrspülmaschine ist hier als allein stehendes oder als sog. teilintegriertes oder auch als voll integriertes Gerät ausgebildet. Im letztgenannten Fall kann der Gerätekörper 5 auch im Wesentlichen mit den Außenwandungen des Spülbehälters 2 abschließen. Ein diesen außen umgebendes Gehäuse kann dann entbehrlich sein. Im unteren Bereich der Geschirrspülmaschine kann sich ein Sockel 12 zur Aufnahme von insbesondere Funktionselementen, wie etwa auch einer Umwälzpumpe für die Spülflotte, befinden. Diese Umwälzpumpe kann insbesondere auch beheizbar sein, um so die Spülflotte auf die im jeweiligen Programmschritt gewünschte Temperatur zu bringen. Eine externe, von der Umwälzpumpe unabhängige Heizung kann zusätzlich oder alternativ vorgesehen sein.

Der beweglichen Tür 3 ist im Ausführungsbeispiel gemäß der Zeichnung in ihrem oberen Bereich vorzugsweise eine in Querrichtung Q der Geschirrspülmaschine erstreckte Bedienblende 8 zugeordnet, die eine von der Vorderseite V zugängliche Eingriffsöffnung 7 zum manuellen Öffnen und/oder Schließen der Tür 3 umfassen kann. In Querrichtung Q hat die Geschirrspülmaschine häufig eine Erstreckung von 45, 50 oder 60 Zentimetern. In Tiefenrichtung von der Vorderseite V nach hinten liegt die Erstreckung häufig ebenfalls bei etwa 60 Zentimetern. Die Werte sind nicht zwingend.

Der Spülbehälter 2 ist umlaufend von insgesamt bei geschlossener Tür oder Klappe 3 drei festen vertikalen Wandungen 13 sowie zwei horizontalen Wandungen 13 begrenzt, von denen eine eine Decke (oben) und eine weitere einen Boden (unten) des Spülbehälters 2 bildet. Die zur Vorderseite, zu einem vor der Geschirrspülmaschine 1 stehenden Benutzer hin angeordnete und hier bewegliche Wandung 14 bildet dabei einen inneren Bestandteil der beweglichen Tür oder Klappe 3 aus.

Die den Boden des Spülbehälters 2 bildende und diesen im Wesentlichen nach unten hin begrenzende Wandung 13 liegt ungefähr horizontal, also parallel zu einem äußeren Boden B, auf dem die Geschirrspülmaschine 1 steht.

Das Haushaltsgerät 1 ist weiter mit zumindest einer Wärmepumpe 20 versehen, deren Bestandteile bzw. Komponenten an unterschiedlichen Stellen im Haushaltsgerät 1 - auch verteilt - angeordnet sein können.

Die Wärmepumpe 20 umfasst einen Kompressor (auch Verdichter genannt) 21, in dem am umlaufenden Wärmepumpenmedium 23 Arbeit geleistet wird, so dass dieses Medium 23 erhitzt wird.

In Fließrichtung 22 des Wärmepumpenmediums 23 folgt auf den Kompressor 21 ein Kondensator bzw. Kondensor bzw. Verflüssiger 24. In diesem kondensiert während des Betriebs der Wärmepumpe 20 das Medium 23 vom gasförmigen in den flüssigen Zustand und gibt durch diesen Phasenwechsel Wärme an die dort herrschende Umgebung ab, also insbesondere an die o. g. Spülflotte und/oder die Luft im Spülbehälter 2. Der Kondensator 24 wirkt damit auch als ein Wärmetauscher. Hierdurch entsteht eine Aufheizung der Spülflotte bzw. Spülflüssigkeit und/oder Luft im Spülbehälter 2, so dass eine zusätzliche elektrische Heizung kleiner ausgebildet sein und kürzer laufen kann als ohne die Wärmepumpe 20. Je nach Ausbildung kann auch auf eine zusätzliche elektrische Heizung ganz verzichtet werden, d.h. die Erwärmung von Spülflüssigkeit und/oder Luft im Spülbehälter erfolgt dann allein mittels der Wärmepumpe. In jedem Fall ergibt sich hier beim gewünschten Aufheizen von Spülflotte und/oder Luft im Spülbehälter 2 eine große energetische Unterstützung durch die Wärmepumpe.

Auf den Kondensator bzw. Verflüssiger 24 folgt in Fließrichtung 22 eine Drossel, insbesondere ein Kapillarröhrchen, oder ähnliche Entspannungseinrichtung 25, an die in Fließrichtung 22 ein Verdampfer 26 anschließt, in dem das zuvor flüssige Medium 23 wieder gasförmig wird. Dabei wird der dortigen Umgebung (zum Beispiel der Küchenluft und/oder einem Latentwärmespeicher) Wärme entzogen, so dass in dieser Umgebung eine Abkühlung stattfindet. Auch der Verdampfer 26 bildet damit einen Wärmetauscher aus, jedoch mit einer anderen Umgebung als der Kondensator 24.

Ab dem Verdampfer 26 ist das Medium 23 wieder gasförmig und kann durch die mechanische Arbeit im dann folgenden Verdichter bzw. Kompressor 21 wieder erhitzt werden, so dass der beschriebene Kreislauf wieder gestartet wird.

In diesem Kreislauf des Wärmetauschermediums 23 ist in dessen Transportrichtung bzw. Fließrichtung betrachtet gemäß der Erfindung einem wärmeabgebenden Teil der Wärmepumpe 20 ein erstes Ventil 30 vorgeordnet und ein zweites Ventil 31 nachgeordnet. Dabei wird unter "Ventil" jedwede Einrichtung verstanden, die geeignet ist, den Fluß von gasförmigem und/oder flüssigem Wärmepumpenmedium 23 ganz oder zumindest nahezu zu unterbrechen. Dies muss nicht zwingend über mechanische Sperrung erfolgen, sondern kann beispielsweise auch über magnetische, chemische und/oder thermodynamisch wirkende Eingriffe erfolgen.

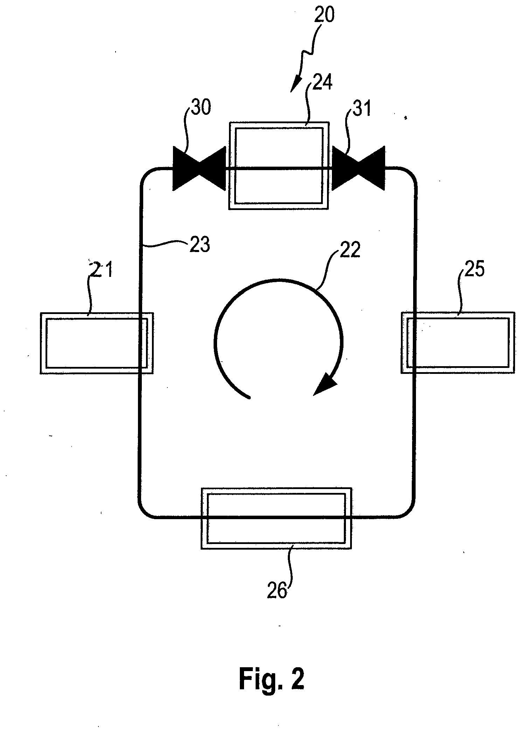

Gemäß Figur 2 sind die genannten Ventile 30, 31 dem Verflüssiger 24, auch als Kondensator bzw. Kondensor bezeichnet, bezüglich der Fließrichtung des Wärmepumpenmediums sowohl vorgeordnet als auch nachgeordnet. Damit wird es ermöglicht, die Effizienz des Systems zu verbessern und thermodynamische Parameter, insbesondere den Druck, zwischen zwei Erhitzungsphasen innerhalb eines Spülgangs bzw. Waschzyklus' zu halten. Insbesondere können beide Ventile 30, 31 gleichartig ausgebildet sein, so dass die Anzahl zusätzlich erforderlicher Bauteile minimiert ist.

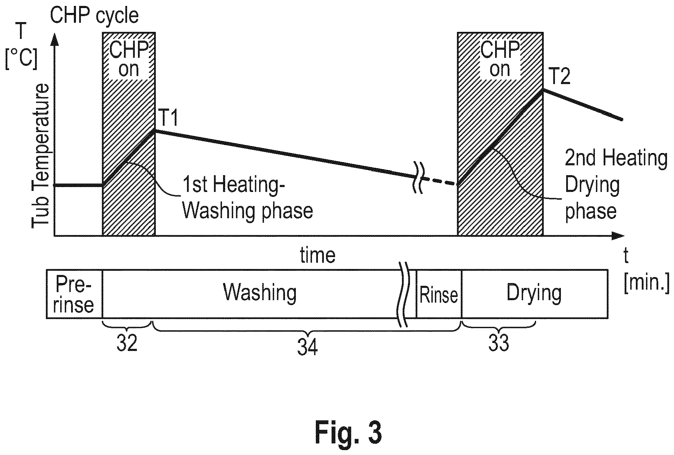

Im Einzelnen ist ein typischer Programmzyklus eines Spülgangs bzw. Waschzyklus' eines durchzuführenden Geschirrspülprogramms eines hier als Geschirrspülmaschine ausgebildeten Haushaltsgeräts 1 in Figur 3 dargestellt: Dieser Zyklus umfasst wenigstens vier Phasen bzw. Teilspülgänge: Vorspülen ("pre-rinse"), Waschen bzw. Reinigen ("washing"), Spülen bzw. Klarspülen ("rinse") als flüssigkeitsführende Teilspülgänge, und Trocknen ("drying") als zyklusabschließenden teilspülgang. Insbesondere kann zwischen der Phase bzw. dem Teilspülgang Reinigen bzw. Waschen und der Phase bzw. dem Teilspülgang Klarspülen mindestens ein Zwischenspülgang zusätzlich eingefügt sein. Als x-Achse ist die Zeit t (in Minuten [min]) und als y-Achse die Temperatur T im Spülbehälter (in [°C]) aufgetragen.

Die Wärmepumpe 20 ist in zumindest zwei Phasen 32, 33 eines Spülgangs jeweils zur Unterstützung einer Erwärmung aktiv:
Nach einem ersten Beispiel ist am Beginn der Reinigungs- bzw. Waschphase eine Erhitzung auf eine gewünschte Temperatur T1 und am Beginn der Trocknungsphase eine weitere Erhitzung auf eine vorzugsweise noch höhere Temperatur T2 vorgesehen. Die jeweilige Erhitzung kann jeweils mit Unterstützung der Wärmepumpe 20, insbesondere allein durch den Betrieb der Wärmepumpe, stattfinden.

Die erste Phase 32 zur Unterstützung einer Erwärmung durch die Wärmepumpe 20 ist damit ein Teil eines flüssigkeitsführenden Teilspülgangs, nämlich hier vorzugsweise der Beginn des Reinigungs- bzw. Waschgangs, des Haushaltsgeräts 1, und zwar die Erwärmung auf die Temperatur T1. Die zweite Phase 33 zur Unterstützung einer Erwärmung durch die Wärmepumpe 20 ist ein Teil eines zyklus- bzw. spülgangabschließenden Trocknungsgangs, und zwar die Erwärmung der Luft und/oder des Spülguts im Spülbehälter auf die Temperatur T2. Beide Phasen 32, 33 sind im Diagramm nach Figur 3 durch die grau unterlegten Bereiche mit der Kennzeichnung "CHP on" hervorgehoben. Zwischen diesen beiden zeitlich zueinander versetzten Phasen 32, 33 können einige Minuten bis typisch einige zehn Minuten oder gar mehr liegen, in denen die Wärmepumpe 20 selbst nicht in Betrieb ist. Das Kürzel "CHP" steht dabei für "compression heat pump", d.h. Wärmepumpe. Die Zeitdauer, die zwischen den beiden zeitlich voneinander beabstandeten Erwärmungsphasen 32, 33 liegt und während der die Wärmepumpe inaktiv ist, d.h. deren Kompressor abgeschaltet ist oder hinsichtlich seiner Kompressionsarbeit gegenüber seinem Normalbetriebsmodus deutlich herabgesetzt ist, ist in der Figur 3 mit dem Bezugszeichen 34 gekennzeichnet.

Wie oben erwähnt, gibt es in der Wärmepumpe 20 zwei Wärmetauscher, nämlich den Kondensator (Verflüssiger) 24 und den Verdampfer 26. Die Namen sind jeweils der Wirkung auf das Wärmepumpenmedium bzw. Wärmetauschermedium 23 zuzuordnen.

Während der ausgeschalteten Zeit 34, d.h. der Zeitdauer 34, während der der Kompressor 21 der Wärmepumpe deaktiviert, d.h. ausgeschaltet oder hinsichtlich seiner Kompressionsarbeit gegenüber seinem Normalbetriebsmodus deutlich herabgesetzt ist, im Zyklus nach Figur 3, also nach der ersten Erhitzungsphase auf die Temperatur T1, besteht die Tendenz des Systems, einen Druckausgleich auf beiden Seiten des Kondensators einzustellen, so dass am Beginn der zweiten Erhitzungsphase 33 zunächst die Wärmepumpe 20 wieder die Phasenübergänge einstellen muss, bevor Ihre eigentliche Wirkung beginnen kann. Diese Einstellungsphase bringt daher sowohl zeitliche als auch energetische Verluste mit sich.

Um dies zu vermeiden und den Zustand aus der ersten Erhitzungsphase 32 auf die Temperatur T1 möglichst lange über die Wartezeit 34 bis zur zweiten Erwärmungsphase 33 zu erhalten, werden beide Ventile 30 und 31 nach Abschluss der ersten Phase 32 zur Unterstützung einer Erwärmung geschlossen. Insbesondere findet das Schließen der Ventile 30, 31 unmittelbar nach Abschluss der ersten Phase 32 zur Unterstützung einer Erwärmung statt, so dass sich bei Inaktivität des Kompressors 21, insbesondere durch Ausschalten des Kompressors 21, unmittelbar der Erhaltungszustand einstellt und eine Tendenz zur Einstellung eines Gleichgewichts zwischen Eingangs- und Ausgangsseite des Kondensators 24 direkt entgegengewirkt wird.

Vor Beginn der zweiten Phase 33 zur Unterstützung einer Erwärmung öffnen die Ventile 30, 31 hingegen wieder, und zwar insbesondere unmittelbar vor Beginn der zweiten Phase zur Unterstützung einer Erwärmung. Auch hier ist die Zeitnähe für ein langes Halten des Zustands optimiert, auch vor Beginn der zweiten Phase 33 wird damit ein Einstellen eines Gleichgewichts so lange wie möglich unterbunden.

Durch das Schließen der Ventile 30, 31 werden insbesondere die währender der ersten Phase 32 erreichten Druckverhältnisse bei geschlossenen Ventilen 30, 31 über die Wartezeit 34 bis zur zweiten Erwärmungsphase 33 zumindest nahezu gehalten. Weiter kann auch die während der ersten Phase 32 erreichte Temperatur des im Verflüssiger oder Kondensator 24 gehaltenen Wärmepumpenmediums 23 bei geschlossenen Ventilen 30, 31 über die Wartezeit 34 bis zur zweiten Erwärmungsphase 33 zumindest nahezu gehalten werden, wobei über die Wartezeit 34 ein gewisses Abfallen der Temperatur nicht zu vermeiden ist, allerdings erheblich weniger als ohne die Ventile 30, 31.

Die Ventile 30, 31 haben vorzugsweise jeweils einen nur geringen räumlichen Abstand zum Kondensator bzw. Verflüssiger 24.

Bei den in den Spülprogrammen hinterlegten Zeiten für die unterschiedlichen Phasen kann die Zeit, in der zu Beginn der zweiten Erhitzungsphase 33 zunächst eine Übergangsphase bzw. Transiente mit Einstellung eines Phasenübergangs stattfinden muss, bevor die Funktion der Wärmepumpe 24 einsetzt, verhindert oder zumindest verkürzt werden, indem durch das Schließen der Ventile 30, 31 der Druck beidseits des Kondensators bzw. Verflüssigers 24 lange gehalten wird.

Insbesondere ist das Öffnungs- und Schließverhalten der beiden Ventile mit in einem Steuerprogramm hinterlegt, um dadurch eine zwangsweise optimierte Anbindung an die Erhitzungsphasen 32 und 33 ohne die Möglichkeit einer Fehlbedienung zu erreichen.

Insgesamt ergibt sich durch die Verkürzung der Anlaufzeit der Wärmepumpe 20 für die zweiten Erhitzungsphase 33 eine deutliche Effizienzverbesserung.

Insgesamt ist daher der Energiebedarf für die Aufheizung der Luft und/oder dem Spülgut im Spülbehälter der Haushaltsgeschirrspülmaschine während der zweiten Erwärmungsphase beim Trocknungsgang erheblich verringert. Eine elektrische Zuheizung bzw. Zusatzheizung kann kleiner dimensioniert sein und muss für die Erreichung der gleichen Endtemperatur auch nur über einen kürzeren Zeitraum eingeschaltet sein. Diese Zuheizung kann ggf. sogar ganz entfallen. Der Grad der Unterstützung durch die Wärmepumpe 20 kann also je nach Ausbildung variieren, entsprechend kann eine elektrische Zusatzheizung kleiner dimensioniert werden oder im Idealfall auch ganz entfallen. Die jeweilige Erwärmung der Spülflotte für den flüssigkeitsführenden Teilspülgang mit der ersten Erwärmungsphase, insbesondere den Waschgang bzw. Reinigungsgang, sowie die Erwärmung der Luft und/oder das Spülgut im Spülbehälter für den spülgangabschließenden Trocknungsgang des jeweilig durchzuführenden Spülgangs kann nach einer vorteilhaften Weiterbildung jeweils durch den alleinigen Betrieb der Wärmepumpe bewerkstelligt werden.

Bei anderen Haushaltsgeräten sind entsprechende Anpassungen vorzunehmen. Das Grundprinzip jedoch, die thermodynamischen Verhältnisse im Verflüssiger oder Kondensator 24 einer Wärmepumpe nach Schluss einer ersten aktiven Phase durch das Schließen von Ventilen 30, 31 zu konservieren und thermisch vom übrigen Wärmepumpenkreislauf bestmöglich zu trennen, bleibt auch dort. Z.B. bei einem Waschtrockner gelten die vorstehenden Ausführungen in analoger Weise, wobei der Begriff "Spülgang" durch "Waschgang" zu ersetzen ist.

Es versteht sich, dass die Erfindung auch bei mehr als zwei Erhitzungsphasen 32, 33 genauso anwendbar ist, indem dann nach Ende der zweiten, dritten, n-ten Phase die Ventile 30, 31 geschlossen und vor Beginn der dritten, vierten, n+1-ten Phase wieder geöffnet werden.

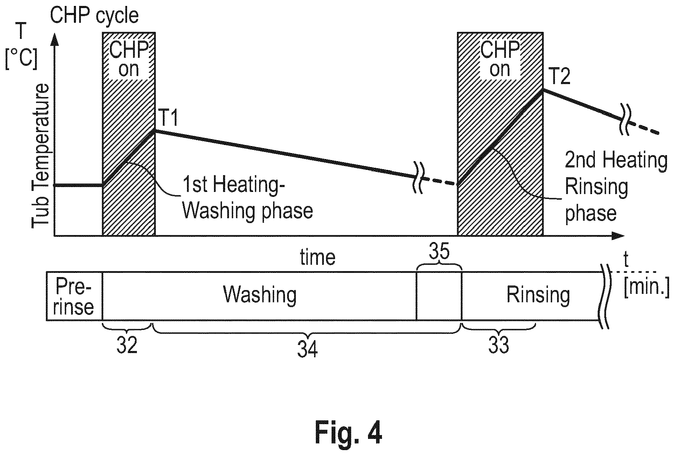

Das schematische Ablaufdiagramm von Figur 4 veranschaulicht ein zweites Ausführungsbeispiel für den Spülgang eines durchzuführenden Geschirrspülprogramms einer Haushaltsgeschirrspülmaschine wie z.B. von Figur 1, bei welchem die Wärmepumpe der Haushaltsgeschirrspülmaschine abweichend zum vorstehenden, ersten Ausführungsbeispiel der Figur 3 ein erstes Mal zu Beginn des Teilspülgangs Reinigen bzw. Waschen zum Erwärmen der mit Reiniger versetzten, im Spülbehälter der Geschirrspülmaschine zu versprühenden Spülflüssigkeit und dann später ein zweites Mal zu Beginn des Teilspülgangs Klarspülen zum Erwärmen der mit Klarspüler versetzten, im Spülbehälter der Geschirrspülmaschine zu versprühenden Spülflüssigkeit aktiviert wird.

Im Einzelnen umfasst der Programmzyklus des Spülgangswenigstens wenigstens vier Phasen bzw. Teilspülgänge: Vorspülen ("pre-rinse"), Waschen bzw. Reinigen ("washing"), Spülen bzw. Klarspülen ("rinse") als flüssigkeitsführende Teilspülgänge und Trocknen ("drying") als abschließenden Teilspülgang. Dabei ist der spülgangabschließende Trocknungsgang in der Figur 4 der zeichnerischen Einfachheit halber weggelassen worden. Insbesondere kann zwischen der Phase bzw. dem Teilspülgang Waschen und der Phase bzw. dem Teilspülgang Klarspülen mindestens ein Zwischenspülgang zusätzlich eingefügt sein. Dieser ist in der Figur 4 zusätzlich mit eingezeichnet und mit dem Bezugszeichen 35 versehen. Als x-Achse ist die Zeit t (in Minuten [min]) und als y-Achse die Temperatur T im Spülbehälter (in [°C]) aufgetragen.

Die Wärmepumpe 20 ist in zumindest zwei Phasen 32, 33 des Spülgangs jeweils zur Unterstützung einer Erwärmung von Spülflüssigkeit aktiv, mit der im Spülbehälter gelagertes Spülgut zu dessen Reinigung jeweils beaufschlagt werden soll:
Am Beginn der Waschphase bzw. Reinigungsphase ist eine Erhitzung auf eine Temperatur T1 und am Beginn der Klarspülphase ist eine weitere Erhitzung auf eine vorzugsweise noch höhere Temperatur T2 vorgesehen. Die jeweilige Erhitzung kann jeweils mit Unterstützung der Wärmepumpe 20, insbesondere allein durch den Betrieb der Wärmepumpe, stattfinden.

Die erste Phase 32 zur Unterstützung einer Erwärmung von mit Reinigungsmittel versetzter Spülflüssigkeit bzw. Spülflotte (Wasser) durch die Wärmepumpe 20 ist damit ein Teil des Reinigungsgangs, nämlich hier vorzugsweise der Beginn des Reinigungsgangs bzw. Waschgangs, der Haushaltsgeschirrspülmaschine, und zwar die Erwärmung auf die Temperatur T1. Die zweite Phase 33 zur Unterstützung einer Erwärmung durch die Wärmepumpe 20 ist ein Teil des Klarspülgangs, und zwar die Erwärmung auf die Temperatur T2. Beide Phasen 32, 33 sind im Diagramm nach Figur 3 durch die grau unterlegten Bereiche mit der Kennzeichnung "CHP on" hervorgehoben. Zwischen diesen beiden zeitlich zueinander versetzten Phasen 32, 33 können einige Minuten bis typisch einige zehn Minuten oder gar mehr liegen, in denen die Wärmepumpe 20 selbst nicht in Betrieb ist. So ist nach Erreichen der Temperatur T1 im Teilspülgang Reinigen keine Erwärmung der mit Reiniger versetzten Spülflüssigkeit mittels der Wärmepumpe während einer sogenannten Nachwaschphase vorgesehen, während der die Temperatur im Spülbehälter langsam abnimmt. Auch für den dem Reinigungsgang nachfolgenden Teilspülgang Zwischenspülen ist keine Erwärmung des dabei verwendeten Wassers mittels der Wärmepumpe vorgesehen. Das Kürzel "CHP" steht dabei für "compression heat pump", d.h. Wärmepumpe. Die Zeitdauer (Wartezeit), die zwischen den beiden zeitlich voneinander beabstandeten Erwärmungsphasen 32, 33 liegt und während der die Wärmepumpe inaktiv ist, ist in der Figur 4 mit dem Bezugszeichen 34 gekennzeichnet.

Wie oben erwähnt, gibt es in der Wärmepumpe 20 zwei Wärmetauscher, nämlich den Kondensator (Verflüssiger) 24 und den Verdampfer 26. Die Namen sind jeweils der Wirkung auf das Wärmepumpenmedium bzw. Wärmetauschermedium 23 zuzuordnen.

Während der ausgeschalteten Zeit 34, d.h. der Zeitdauer 34, während der der Kompressor 21 der Wärmepumpe deaktiviert, d.h. ausgeschaltet oder hinsichtlich seiner Kompressionsarbeit gegenüber seinem Normalbetriebsmodus deutlich herabgesetzt ist, im Zyklus nach Figur 4, also nach der ersten Erhitzungsphase auf die Temperatur T1, besteht die Tendenz des Systems, einen Druckausgleich auf beiden Seiten des Kondensators einzustellen, so dass am Beginn der zweiten Erhitzungsphase 33 zunächst die Wärmepumpe 20 wieder die Phasenübergänge einstellen muss, bevor Ihre eigentliche Wirkung beginnen kann. Diese Einstellungsphase bringt daher sowohl zeitliche als auch energetische Verluste mit sich.

Um dies zu vermeiden und den Zustand aus der ersten Erhitzungsphase 32 auf die Temperatur T1 möglichst lange über die Wartezeit 34 bis zur zweiten Erwärmungsphase 33 zu erhalten, werden beide Ventile 30 und 31 nach Abschluss der ersten Phase 32 zur Unterstützung einer Erwärmung geschlossen. Insbesondere findet das Schließen der Ventile 30, 31 unmittelbar nach Abschluss der ersten Phase 32 zur Unterstützung einer Erwärmung statt, so dass sich bei Ausschalten des Kompressors 21 unmittelbar der Erhaltungszustand einstellt und eine Tendenz zur Einstellung eines Gleichgewichts zwischen Eingangs- und Ausgangsseite des Kondensators 24 direkt entgegengewirkt wird.

Vor Beginn der zweiten Phase 33 zur Unterstützung einer Erwärmung öffnen die Ventile 30, 31 hingegen wieder, und zwar insbesondere unmittelbar vor Beginn der zweiten Phase zur Unterstützung einer Erwärmung. Auch hier ist die Zeitnähe für ein langes Halten des Zustands optimiert, auch vor Beginn der zweiten Phase 33 wird damit ein Einstellen eines Gleichgewichts so lange wie möglich unterbunden.

Durch das Schließen der Ventile 30, 31 werden insbesondere die währender der ersten Phase 32 erreichten Druckverhältnisse bei geschlossenen Ventilen 30, 31 über die Wartezeit 34 bis zur zweiten Erwärmungsphase 33 zumindest nahezu gehalten. Weiter kann auch die während der ersten Phase 32 erreichte Temperatur des im Verflüssiger oder Kondensator 24 gehaltenen Wärmepumpenmediums 23 bei geschlossenen Ventilen 30, 31 über die Wartezeit 34 bis zur zweiten Erwärmungsphase 33 zumindest nahezu gehalten werden, wobei über die Zeit ein gewisses Abfallen der Temperatur nicht zu vermeiden ist, allerdings erheblich weniger als ohne die Ventile 30, 31.

Die Ventile 30, 31 haben vorzugsweise jeweils einen nur geringen räumlichen Abstand zum Kondensator bzw. Verflüssiger 24.

Bei den in den Spülprogrammen hinterlegten Zeiten für die unterschiedlichen Phasen kann die Zeit, in der zu Beginn der zweiten Erhitzungsphase 33 zunächst eine Übergangsphase bzw. Transiente mit Einstellung eines Phasenübergangs stattfinden muss, bevor die Funktion der Wärmepumpe 24 einsetzt, verhindert oder zumindest verkürzt werden, indem durch das Schließen der Ventile 30, 31 der Druck beidseits des Kondensators bzw. Verflüssigers 24 lange gehalten wird.

Insbesondere ist das Öffnungs- und Schließverhalten der beiden Ventile mit in einem Steuerprogramm hinterlegt, um dadurch eine zwangsweise optimierte Anbindung an die Erhitzungsphasen 32 und 33 ohne die Möglichkeit einer Fehlbedienung zu erreichen.

Insgesamt ergibt sich durch die Verkürzung der Anlaufzeit der Wärmepumpe 20 für die zweiten Erhitzungsphase 33 eine deutliche Effizienzverbesserung.

Insgesamt ist daher der Energiebedarf für die Aufheizung der Spülflotte durch die Wärmepumpe bei der zweiten Erwärmungsphase im Klarspülgang erheblich verringert. Eine elektrische Zuheizung bzw. Zusatzheizung kann kleiner dimensioniert sein und muss für die Erreichung der gleichen Endtemperatur auch nur über einen kürzeren Zeitraum eingeschaltet sein. Diese Zuheizung kann ggf. sogar ganz entfallen. Der Grad der Unterstützung durch die Wärmepumpe 20 kann also je nach Ausbildung variieren, entsprechend kann eine elektrische Zusatzheizung kleiner dimensioniert werden oder im Idealfall auch ganz entfallen. Die jeweilige Erwärmung der Spülflotte für den flüssigkeitsführenden Teilspülgang mit der ersten Erwärmungsphase, insbesondere den Waschgang bzw. Reinigungsgang, sowie die Erwärmung der Luft und/oder das Spülgut im Spülbehälter für den spülgangabschließenden Trocknungsgang des jeweilig durchzuführenden Spülgangs kann nach einer vorteilhaften Weiterbildung jeweils durch den alleinigen Betrieb der Wärmepumpe bewerkstelligt werden.

Bei anderen Haushaltsgeräten sind entsprechende Anpassungen vorzunehmen. Das Grundprinzip jedoch, die thermodynamischen Verhältnisse im Verflüssiger oder Kondensator 24 einer Wärmepumpe nach Schluss einer ersten aktiven Phase durch das Schließen von Ventilen 30, 31 zu konservieren und thermisch vom übrigen Wärmepumpenkreislauf bestmöglich zu trennen, bleibt auch dort. Z.B. bei einem Waschtrockner gelten die vorstehenden Ausführungen in analoger Weise, wobei der Begriff "Spülgang" durch "Waschgang" zu ersetzen ist.

Es versteht sich, dass die Erfindung auch bei mehr als zwei Erhitzungsphasen 32, 33 genauso anwendbar ist, indem dann nach Ende der zweiten, dritten, n-ten Phase die Ventile 30, 31 geschlossen und vor Beginn der dritten, vierten, n+1-ten Phase wieder geöffnet werden. So kann beispielsweise die Wärmepumpe auch beim Trocknungsgang des jeweiligen Spülgangs zum Erwärmung der Luft und/oder des Spülguts im Spülbehälter für eine dritte Phase (zusätzlich zur zweiten Phase im Klarspülgang und der ersten Phase im Reinigungsgang) aktiviert werden. Zweckmäßigerweise ist somit das zweite Ausführungsbeispiel von Figur 4 mit dem ersten Ausführungsbeispiel von Figur 3 kombinierbar.

### Bezugszeichenliste

- 1: Haushaltsgeschirrspülmaschine,
- 2: Spülbehälter,
- 3: Tür,
- 4: Öffnungsrichtung,
- 5: Gerätekörper,
- 6: Dekorplatte,
- 7: Griffmulde,
- 8: Bedienblende,
- 10: Besteckschublade,
- 11: Geschirrkorb,
- 12: Sockel,
- 13: Wandung,
- 14: bewegliche Wandung,

- 20: Wärmepumpe,
- 21: Verdichter oder Kompressor,
- 22: Fließrichtung,
- 23: Wärmepumpenmedium bzw. Wärmetauschermedium,
- 24: Verflüssiger oder Kondensator,
- 25: Expansionseinrichtung,
- 26: Verdampfer,

- 30: vorgeordnetes Ventil,
- 31: nachgeordnetes Ventil,
- 32: erste Phase,
- 33: zweite Phase,
- 34: inaktive Phase des Kompressors der Wärmepumpe

- V: Vorderseite,
- Q: Querrichtung,
- B: Boden

## Patentansprüche

1. Haushaltsgeschirrspülmaschine (1) mit einem Spülbehälter (2) zur Aufnahme von Geschirr, Gläsern, Bestecken oder ähnlichem Spülgut, wobei die Haushaltsgeschirrspülmaschine (1) mit zumindest einer Wärmepumpe (20), die einen Verflüssiger und einen Verdampfer in einem Kreislauf von Wärmetauschermedium umfasst, versehen ist, wobei im Kreislauf des Wärmetauschermediums (23) einem wärmeabgebenden Teil der Wärmepumpe (20) ein erstes Ventil (30) vorgeordnet und ein zweites Ventil (31) nachgeordnet ist, wobei das wärmeabgebende Teil der Wärmepumpe (20) ein Verflüssiger (24), auch als Kondensator bezeichnet, ist, wobei die Wärmepumpe (20) jeweils in zumindest zwei Phasen (32;33) eines durchzuführenden Spülgangs zur Unterstützung einer jeweiligen Erwärmung aktiv ist, wobei die erste Phase (32) zur Unterstützung einer Erwärmung ein Teil eines flüssigkeitsführenden Teilspülgangs des durchzuführenden Spülgangs ist,wobei die zweite Phase (33) zur Unterstützung einer Erwärmung ein Teil eines weiteren flüssigkeitsführenden Teilspülgangs des durchzuführenden Spülgangs oder eines Trocknungsgangs des durchzuführenden Spülgangs ist, wobei die Ventile (30;31) nach Abschluß der ersten Phase (32) zur Unterstützung einer Erwärmung schließen wobei das erste Ventil 30) und das zweite Ventil (31) den Verflüssiger (24) einlassseitig und auslassseitig während einer inaktiven Phase der Wärmepumpe (20), d.h. während der Zeitdauer, die zwischen den zwei Phasen (32; 33) des durchzuführenden Spülgangs mit jeweils aktiv betriebener Wärmepumpe (20) liegt, absperren, und wobei die Ventile (30;31) vor Beginn der zweiten Phase (33) des durchzuführenden Spülgangs zur Unterstützung einer Erwärmung öffnen.

2. Haushaltsgeschirrspülmaschine (1) nach Anspruch 1,
**dadurch gekennzeichnet,**
**dass** das Schließen der Ventile (30;31) unmittelbar nach Abschluß der ersten Phase (32) zur Unterstützung einer Erwärmung stattfindet.

3. Haushaltsgeschirrspülmaschine (1) nach einem der vorhergehenden Ansprüche,
**dadurch gekennzeichnet,**
**dass** das Öffnen der Ventile (30;31) unmittelbar vor Beginn der zweiten Phase (33) zur Unterstützung einer Erwärmung stattfindet.

4. Haushaltsgeschirrspülmaschine (1) nach mindestens einem der vorhergehenden Ansprüche,
**dadurch gekennzeichnet,**
**dass** bei einer Haushaltsgeschirrspülmaschine die erste aktive Phase (32) der Wärmepumpe (20) ein Teil eines ersten flüssigkeitsführenden Teilspülgangs, insbesondere des Reinigungsgangs, des durchzuführenden Spülgangs ist, und dass die zweite aktive Phase (33) ein Teil eines zweiten flüssigkeitsführenden Teilspülgangs, insbesondere Klarspülgangs, des Spülgangs ist, wobei das erste Ventil (30) und dass zweite Ventil (31) während der ersten aktiven Phase (32) und der zweiten aktiven Phase (33) der Wärmepumpe (20) geöffnet sind, wohingegen das erste Ventil (30) und das zweite Ventil (31) im Zeitraum (34) zwischen der ersten aktiven Phase (32) und der zweiten aktiven Phase (33) der Wärmepumpe (20), während dem die Wärmepumpe inaktiv ist, jeweils geschlossen sind.

5. Haushaltsgeschirrspülmaschine (1) nach einem der vorhergehenden Ansprüche,
**dadurch gekennzeichnet,**
**dass** die währender der ersten Phase (32) erreichten Druckverhältnisse bei geschlossenen Ventilen (30;31) zumindest nahezu gehalten werden.

6. Haushaltsgeschirrspülmaschine (1) nach einem der vorhergehenden Ansprüche, **dadurch gekennzeichnet,**
**dass** die währender der ersten Phase (32) erreichte Temperatur des im Verflüssiger bzw. Kondensator (24) gehaltenen Wärmepumpenmediums (23) bei geschlossenen Ventilen (30;31) zumindest nahezu gehalten wird.

7. Haushaltsgeschirrspülmaschine (1) nach einem der vorhergehenden Ansprüche,
**dadurch gekennzeichnet,**
**dass** beide Ventile (30;31) gleichartig ausgebildet sind.

8. Haushaltsgeschirrspülmaschine (1) nach einem der vorhergehenden Ansprüche,
**dadurch gekennzeichnet,**
**dass** das Öffnungs- und Schließverhalten der beiden Ventile (30;31) in einem Steuerprogramm hinterlegt ist.

## Claims

1. Household dishwasher (1) with a dishwasher cavity (2) for receiving dishes, glasses, cutlery or similar items to be washed, wherein the household dishwasher (1) is provided with at least one heat pump (20), which comprises a liquefier and an evaporator in a circuit of heat exchanger medium, wherein in the circuit of the heat exchanger medium (23) a first valve (30) is arranged before a heat-emitting part of the heat pump (20) and a second valve (31) is arranged thereafter, wherein the heat-emitting part of the heat pump (20) is a liquefier (24), also referred to as a condenser, wherein the heat pump (20) in each case is active in at least two phases (32;33) of a washing cycle to be carried out for supporting a respective heating, wherein the first phase (32) for supporting a heating is a part of a liquid-conducting washing subcycle of the washing cycle to be carried out, wherein the second phase (33) for supporting a heating is a part of a further liquid-conducting washing subcycle of the washing cycle to be carried out or of a drying cycle of the washing cycle to be carried out, wherein the valves (30;31) close following the conclusion of the first phase (32) for supporting a heating, wherein the first valve (30) and the second valve (31) block the liquefier (24) on the inlet side and outlet side during an inactive phase of the heat pump (20), i.e. during the period of time which lies between the two phases (32; 33) of the washing cycle to be carried out with the heat pump (20) being actively operated in each case, and wherein the valves (30;31) open before the beginning of the second phase (33) of the washing cycle to be carried out for supporting a heating.

2. Household dishwasher (1) according to claim 1,
**characterised in that**
the closing of the valves (30;31) takes place immediately following the conclusion of the first phase (32) for supporting a heating.

3. Household dishwasher (1) according to one of the preceding claims,
**characterised in that**
the opening of the valves (30;31) takes place immediately before the beginning of the second phase (33) for supporting a heating.

4. Household dishwasher (1) according to at least one of the preceding claims,
**characterised in that**
in the case of a household dishwasher, the first active phase (32) of the heat pump (20) is a part of a first liquid-conducting washing subcycle, in particular the cleaning cycle, of the washing cycle to be carried out, and that the second active phase (33) is a part of a second liquid-conducting washing subcycle, in particular rinsing cycle with rinse-aid, of the washing cycle, wherein the first valve (30) and the second valve (31) are opened during the first active phase (32) and the second active phase (33) of the heat pump (20), whereas the first valve (30) and the second valve (31) are each closed in the period of time (34) between the first active phase (32) and the second active phase (33) of the heat pump (20), during which the heat pump is inactive.

5. Household dishwasher (1) according to one of the preceding claims,
**characterised in that**
the pressure ratios achieved during the first phase (32) are at least approximately held when the valves (30;31) are closed.

6. Household dishwasher (1) according to one of the preceding claims,
**characterised in that**
the temperature of the heat pump medium (23) held in the liquefier or condenser (24) achieved during the first phase (32) is at least approximately held when the valves (30;31) are closed.

7. Household dishwasher (1) according to one of the preceding claims,
**characterised in that**
both valves (30;31) are embodied similarly.

8. Household dishwasher (1) according to one of the preceding claims,
**characterised in that**
the opening and closing behaviour of the two valves (30;31) is stored in a control program.

## Revendications

1. Machine à laver la vaisselle à usage ménager (1) avec une cuve de lavage (2) pour la réception d'assiettes, de verres, de couverts ou d'articles similaires devant être lavés, la machine à laver la vaisselle à usage ménager (1) étant pourvue d'au moins une pompe à chaleur (20) qui comporte un liquéfacteur et un évaporateur dans un circuit de milieu échangeur de chaleur, dans laquelle, dans le circuit du milieu échangeur de chaleur (23), une première soupape (30) est disposée en amont d'une partie de la pompe à chaleur (20) dégageant de la chaleur et une deuxième soupape (31) est disposée en aval de cette partie, dans laquelle la partie de la pompe à chaleur (20) dégageant de la chaleur est un liquéfacteur (24), également appelé condenseur, dans laquelle la pompe à chaleur (20) est active respectivement dans au moins deux phases (32 ; 33) d'un processus de lavage à effectuer pour le soutien d'un réchauffage respectif, dans laquelle la première phase (32) pour le soutien d'un réchauffage est une partie d'un processus de lavage partiel guidant du liquide du processus de lavage à effectuer, dans laquelle la deuxième phase (33) pour le soutien d'un réchauffage est une partie d'un autre processus de lavage partiel guidant du liquide du processus de lavage à effectuer ou d'un processus de séchage du processus de lavage à effectuer, dans laquelle les soupapes (30 ; 31) se ferment après la fin de la première phase (32) pour le soutien d'un réchauffage, dans laquelle la première soupape (30) et la deuxième soupape (31) bloquent le liquéfacteur (24) côté entrée et côté sortie pendant une phase inactive de la pompe à chaleur (20), c'est-à-dire pendant la durée qui est comprise entre les deux phases (32 ; 33) du processus de lavage à effectuer avec respectivement une pompe à chaleur (20) en fonctionnement actif, et dans laquelle les soupapes (30 ; 31) s'ouvrent avant le début de la deuxième phase (33) du processus de lavage à effectuer pour le soutien d'un réchauffage.

2. Machine à laver la vaisselle à usage ménager (1) selon la revendication 1,
**caractérisée**
**en ce que** la fermeture des soupapes (30 ; 31) a lieu immédiatement après la fin de la première phase (32) pour le soutien d'un réchauffage.

3. Machine à laver la vaisselle à usage ménager (1) selon l'une des revendications précédentes,
**caractérisée**
**en ce que** l'ouverture des soupapes (30 ; 31) a lieu immédiatement avant le début de la deuxième phase (33) pour le soutien d'un réchauffage.

4. Machine à laver la vaisselle à usage ménager (1) selon au moins l'une des revendications précédentes,
**caractérisée**
**en ce que**, avec une machine à laver la vaisselle à usage ménager, la première phase active (32) de la pompe à chaleur (20) est une partie d'un premier processus de lavage partiel guidant du liquide, en particulier du processus de nettoyage, du processus de lavage à effectuer, et **en ce que** la deuxième phase active (33) est une partie d'un deuxième processus de lavage partiel guidant du liquide, en particulier du processus de rinçage, du processus de lavage, dans laquelle la première soupape (30) et la deuxième soupape (31) sont ouvertes pendant la première phase active (32) et la deuxième phase active (33) de la pompe à chaleur (20), tandis que la première soupape (30) et la deuxième soupape (31) sont respectivement fermées au cours de la période (34) entre la première phase active (32) et la deuxième phase active (33) de la pompe à chaleur (20), pendant laquelle la pompe à chaleur est inactive.

5. Machine à laver la vaisselle à usage ménager (1) selon l'une des revendications précédentes,
**caractérisée**
**en ce que** les rapports de pression atteints pendant la première phase (32) avec les soupapes (30 ; 31) fermées sont maintenus au moins approximativement.

6. Machine à laver la vaisselle à usage ménager (1) selon l'une des revendications précédentes,
**caractérisée**
**en ce que** la température, atteinte pendant la première phase (32), du milieu de pompe à chaleur (23) contenu dans le liquéfacteur ou condenseur (24) avec les soupapes (30 ; 31) fermées est maintenue au moins approximativement.

7. Machine à laver la vaisselle à usage ménager (1) selon l'une des revendications précédentes,
**caractérisée**
**en ce que** les deux soupapes (30 ; 31) sont conçues de la même manière.

8. Machine à laver la vaisselle à usage ménager (1) selon l'une des revendications précédentes,
**caractérisée**
**en ce que** le comportement d'ouverture et de fermeture des deux soupapes (30 ; 31) est déposé dans un programme de commande.
